Europäisches Patentamt

(19) European Patent Office

Office européen des brevets

(11) Publication number: **0 062 385**
**B1**

(12) **EUROPEAN PATENT SPECIFICATION**

(45) Date of publication of patent specification: **05.03.86**

(21) Application number: **82200410.7**

(22) Date of filing: **01.04.82**

(51) Int. Cl.⁴: **B 32 B 15/08,** B 65 D 1/28, B 65 D 25/14

(54) **Food or beverage cans made from plastic coated steel sheet.**

(30) Priority: **02.04.81 US 250354**
**02.04.81 US 250355**

(43) Date of publication of application:
**13.10.82 Bulletin 82/41**

(45) Publication of the grant of the patent:
**05.03.86 Bulletin 86/10**

(84) Designated Contracting States:
**BE DE FR GB IT NL SE**

(56) References cited:
**EP-A-0 019 835**
**GB-A-1 394 883**
**GB-A-2 008 492**
**US-A-3 750 827**

(73) Proprietor: **THE DOW CHEMICAL COMPANY**
**2030 Dow Center Abbott Road P.O. Box 1967**
**Midland, MI 48640 (US)**

(72) Inventor: **Hitchcock, Martin Keith**
**491 Derby Downs Rd.**
**Newark Ohio (US)**
Inventor: **Potter, Craig William**
**2000 South Main St.**
**Findlay Ohio (US)**
Inventor: **Romesberg, Floyd Eugene**
**18 Wyddfa Court**
**Granville Ohio (US)**
Inventor: **Colburn, Lyle Wilson**
**1594 Stonewell Drive**
**Newark Ohio (US)**

(74) Representative: **Urbanus, Henricus Maria, Ir.**
**et al**
**c/o Vereenigde Octrooibureaux Nieuwe**
**Parklaan 107**
**NL-2587 BP 's-Gravenhage (NL)**

Courier Press, Leamington Spa, England.

# 0 062 385

**Description**

The present invention relates to the manufacture of metallic food and beverage cans and more particularly to the manufacture of 2-piece cans via a draw-redraw metal forming process. In another aspect, the present invention relates to drawn containers bodies made of an extrusion coated or film laminated plastic/metal/plastic laminate via a draw-redraw steel can forming process.

Metallic cans of various types and sizes find widespread commercial use in the packaging of a wide variety of foods and beverages. In such food and beverage packaging usage, it is generally desired to avoid direct contact between the food or beverage to be packaged and the metallic substance from which the container is manufactured. To that end, metallic cans for food and beverage packaging are typically coated on at least their interior surfaces with a coating of a relatively inert organic substance.

Historically, such organic can coatings were typically deposited or applied from relatively low solids organic solvent-based solutions. However, in more recent times, environmental concerns and regulations requiring substantial reductions in airborne emissions from various industrial facilities have prompted a need for can coatings and can coating processes involving substantially less organic solvent usage (and thus substantially less potential for undesired airborne organic solvent emissions) than is normally encountered with the use of said low solids content organic solvent-based solutions.

In response to the aforementioned environmental concerns and the attendant need for reduced solvent emission, certain waterborne can coating compositions and high solids organic solvent-based can coating compositions have been developed. While such waterborne and high solids organic systems appear to be potentially suitable for use in connection with certain types of can manufacturing operations (e.g., as coatings in the manufacture of 3-piece rolled and seamed cans and in coating the exterior and/or interior surface of pre-formed aluminum and/or steel cans made by the draw and iron can forming process), they are not generally satisfactory for use in connection with draw-redraw can forming processes in which the coating employed on the pre-coated steel can stock is required to withstand the rather severe mechanical stresses involved in the can body forming operation. Moreover, even the organic solvent or plasticizer-based polyvinyl chloride, epoxy and epoxy phenolic systems conventionally employed to prepare can sheet or can coil stock for use in draw-redraw can forming operations are somewhat limited in terms of the maximum depth to diameter draw ratio (or severity of draw) which can be tolerated without coating failure.

In view of the foregoing, it is an object of the present invention to provide an improvement in the manufacture of steel food or beverage cans by the draw-redraw process whereby the use of organic solvent-based coatings for the steel feed stock can be eliminated. In addition, it is also an object of this invention to provide a means by which retortable draw-redraw containers can be manufactured from film laminated or extrusion coated steel sheet material while still maintaining equal or greater depth to diameter of draw ratio capability relative to that currently possible using the conventional organic solvent or plasticizer based coating technology.

The term "retortable" as herein used is typically applied to containers filled with a food product or a beverage which is sterilized and processed by immersion of the filled containers in a hot bath maintained at an elevated temperature of about 121°C for a prolonged period of time such as, for example, an hour or longer.

These and other objects are achieved in accordance with the present invention by a drawn food or beverage container body characterized in that it is made of a laminated or extrusion coated steel sheet comprising a steel sheet having adhered to at least one major surface thereof a multilayered synthetic thermoplastic resin coating comprising an adhesive synthetic thermoplastic resin inner layer which is composed of at least a major proportion of a random copolymer of ethylene, which is solid at ambient temperature and atmospheric pressure, with from 1 to 30 weight percent, based upon said copolymer, of an ethylenically unsaturated carboxylic acid monomer or a partial ester or an anhydride thereof and which copolymer is bonded on one side directly to the surface of said steel sheet and is adhered on its other side to an outer layer of a synthetic thermoplastic polymer resin having a crystalline melting point of at least 121°C, and that the container body has been post-baked after its formation but prior to its use in food or beverage canning operations at a temperature above the crystalline melting point of the highest melting point resin employed in said thermoplastic resin coating for such period of time as to relieve the stress created in such coating during the formation of said can body, and/or has been exposed to an electron beam irradiation dosage of from 2 to 20 megarads.

Generally, the claimed invention eliminates two problems experienced with conventional coating or coatings deposited from an organic solvent solution. One problem is that removal of the solvent after coating deposition yields an amount of airborne solvent emissions. Such emissions are the target of a number of environmental concerns and regulations. A second problem is that organic solvent coatings conventionally employed to prepare can sheet or can coil stock for use in draw-redraw can forming operations are somewhat limited in terms of the maximum depth to diameter draw ratio (i.e., severity of draw) which can be tolerated without coating failure.

The present invention specifically relates to a drawn food or beverage container body which has a resin coating which allows the can to withstand retort processing conditions. The outer layer of the coating must be composed of a resin which has a crystalline melting point of greater than 121°C. Resins which have a lower crystalline melting point may become a flowable melt under the conditions employed in food processing operations. A layer which becomes a flowable melt loses its efficacy as a protective coating.

The outer layer must also be composed of a resin which is relatively impervious to water and greases both at retort temperatures used during processing and at ambient temperatures encountered during storage. Coatings which fail at retort temperatures are useless in food canning applications.

It has been found that the adhesive layer resin inner layer, when used without the aforementioned outer layer, is unsuitable at retort processing conditions. The draw-redraw can forming process imparts a great deal of residual stress to the adhesive inner layer. Thus, the adhesive resin inner layer must have sufficient strength to withstand such stresses at ambient temperatures. It does not, however, have sufficient elevated temperature strength properties to withstand such residual stresses at retort temperatures.

EP—A—0019835 discloses a complete different structure in that a core of polymeric resinous material has tightly adhered to each side thereof a metal skin layer, if desired by the use of an intermediate adhesive layer therebetween, which latter may comprise a copolymer of ethylene and an ethylenically unsaturated carboxylic acid. The resinous core may comprise an ethylene homopolymer.

The metal/plastic/metal laminate of the reference is a structural laminate such as may be employed for paneling, doors, desk drawers, and the like.

GB—2008492 discloses a structure comprising a metal substrate and an olefin resin layer, e.g. an ethylene polymer bonded to the metal substrate through a primer layer, said primer layer comprising (A) a polar group-containing ethylenically unsaturated monomer modified olefin resin, e.g. a copolymer of ethylene and an ethylenically unsaturated carboxylic acid and (B) a coating film-forming base resin, e.g. an acrylic resin. This structure is neither suggestive of the present laminated structure.

It is noteworthy that the modified resin (A) and the coating film-forming base resins (B) are incorporated into a specific mixed solvent to form a paint and a primer layer. One object of this invention, however, is to avoid the use of organic solvent-based solutions.

Moreover, in those instances where film lamination or extrusion coating is employed for both major planar surfaces of the steel sheet material, the invention permits the preparation of retortable plastic coated draw-redraw beverage and food cans totally without the use of organic solvent or plasticizer based coating systems. Further, the invention is especially beneficial in that it facilitates the preparation of retortable draw-redraw cans having draw ratio capabilities (i.e., depth to diameter draw ratio capabilities) at least comparable to that obtained with coated steel can sheet stock prepared using the conventional organic solvent or plasticizer based canstock coating systems. In addition, the laminates employed can sometimes obviate the use of the external drawing lubricants which are typically employed in the subject draw-redraw can forming process.

Steel sheet materials suitably employed in the practice of the present invention include any steel sheet materials which exhibit good adhesion to the adhesive synthetic thermoplastic inner layer which is directly bonded thereto. Examples of such steel sheet materials include those types of chemically or electrochemically coated (e.g., electrolytically plated) steel sheetstocks already known in the art to be useful in the manufacture of food and beverage containers. Preferably, the steel sheet material employed herein is a non-ferrous metal coated steel sheet such as chromium/chromium oxide coated steel (also commonly referred to in the art as chrome/chrome oxide coated steel, tin-free steel and as electrolytically chrome coated steel which bears a composite coating of chrome and chrome oxide on both major planar surfaces of said steel sheet and various species or versions of which are well known in the art.

The thickness of the steel sheet employed in the practice of the present invention corresponds to that employed in conventional draw-redraw can manufacturing operations and is typically in the range of from 127 to 381 µm (5 to 15 mils). Preferably, such thickness is in the range of from 178 to 254 µm (7 to 10 mils).

The adhesive synthetic thermoplastic resin employed to form the innermost layer of the above-noted multilayered synthetic thermoplastic resin coating (i.e., the layer directly bonded to the surface of the steel sheet material employed) comprises at least a major proportion of a normally solid random copolymer of ethylene with from 1 to 30 weight percent, based upon such copolymer, of an ethylenically unsaturated carboxylic acid monomer. Preferably, such adhesive synthetic thermoplastic resin exhibits an initial 90° peel strength at ambient temperature (i.e., 25°C) of at least 2.65 N/mm (preferably at least 3.51 and most preferably at least 4.4 N/mm) when measured by ASTM D 1876 in the form of a steel/adhesive layer/steel sandwich construction in which each steel layer has a thickness of 152 µm (6 mils).

Examples of resins suitably employed as the major component of the aforementioned adhesive resin inner layers in the practice of the present invention include normally solid random copolymers of a major proportion of ethylene with from 1 to 30 (preferably from 2 to 20) weight percent, based upon such copolymer of an ethylenically unsaturated carboxylic acid monomer such as, for example, ethylenically unsaturated mono- or polybasic carboxylic acids per se (e.g., acrylic acid, methacrylic acid, crotonic acid, fumaric acid, maleic acid, itaconic acid, etc.); partial esters of polybasic ethylenically unsaturated acids (e.g., monomethyl maleate, monoethyl maleate, monomethyl fumarate, monoethyl fumarate, tripropylene glycol monomethyl ether acid maleate, ethylene glycol monophenol ether acid meleate, etc.); polybasic ethylenically unsaturated carboxylic acid anhydrides (e.g., maleic anhydride, etc.) and the like. In addition, partially neutralized versions of the aforementioned carboxylic acid containing polymers, generally referred to in the art as ionomers, can also be suitably employed. Further, the foregoing adhesive resins

3

can consist essentially of ethylene and the aforementioned ethylenically unsaturated carboxylic acid monomers or can further contain a minor amount (e.g., up to about 20 weight percent) of other types of monomers copolymerizable therewith such as, for example, esters of acrylic acid and the like.

Preferably, the adhesive resin employed as the major component in the aforementioned adhesive layer may optionally further include a minor proportion (e.g., up to about 20 percent) of other copolymerizable monomers such as, for example, lower alkanol esters of acrylic or methacrylic acid. The thickness of each of the individual adhesive resin inner layers on the plastic coated steel sheets used in the practice of the present invention is typically in the range of from 2.5 to 35.6 µm (0.1 to 1.4 mils), preferably from 5.1 to 20.3 µm (0.2 to 0.8 mil).

As has been noted, each of the outer layers in the aforementioned multilayered thermoplastic resin coatings is composed of a synthetic thermoplastic resin which has a crystalline melting point of 121°C or more. Preferably, the crystalline melting point of such synthetic thermoplastic resin is greater than 121°C. This feature is important in order that the layer composed of such resin does not become a flowable melt under the conditions employed in the food processing operation but instead maintains its integrity as a protective coating layer during such processing. In addition, it is also important that the synthetic thermoplastic resin employed in such layer be relatively gouge or damage resistant (at least at ambient temperatures and both before and after exposure to steam and/or grease at 121°C). The resin should also be relatively inert or impervious to water, grease and the various foodstuffs and/or beverages to be ultimately packaged in the subject draw-redraw cans both at the elevated temperatures typically employed during the post-canning processing operations (e.g., in retorting operations) and at the ambient temperatures encountered during storage pending final consumption of such food or beverage contents. Further, it is also important that the thermoplastic resin employed in such outer resin layer possess (a) sufficient strength and toughness to withstand the rather severe stresses imparted thereto during formation of the draw-redraw can body from the instant plastic/metal/plastic laminates as well as (b) sufficient adhesiveness to the above-described adhesive resin inner layer to prevent delamination therefrom during such can forming operation and during the subsequent food or beverage canning and/or processing operations.

Examples of synthetic thermoplastic resins suitable for use in the aforementioned ≧121°C melting point outer layers include high density polyethylene (e.g., having a density in the range of from 0.950 to 0.965 and a melt index in the range of from 0.05 to about 5), polypropylene, polyamides, polyesters, ethylene/propylene copolymers and the like. Further, blends of these ≧121°C melting point resins with resins of lower melting points (e.g., low density polyethylene, ethylene/acrylate copolymers, ethylene/vinyl acetate copolymers, random ethylene/acrylic or methacrylic acid copolymers, ionomers, chlorinated polyethylene, etc.) can also be employed so long as the effective melting point of the resulting blend remains at above 121°C. Indeed, in those instances where high density polyethylene resin is employed as the predominant component of the outer resin layer, it has been found to be especially advantageous to employ a blend of such high density polyethylene with up to about 30 weight percent, based upon the blend weight, of a low density polyethylene therein. Resins which are particularly preferred for use as the outermost coating layers include high density polyethylene having densities of from 0.960 to 0.965 g/cc and melt indexes of from 0.05 to 3, blends of such high density polyethylenes with up to about 30 weight percent of low density polyethylene, and polyamide resins such as nylon 6, nylon 6/9 and nylon 6/12.

The thickness of each of the outer resin layers is typically from 2.5 to 35.6 µm (0.1 to 1.4 mils), preferably from 5.1 to 20.3 µm (0.2 to 0.8 mil).

In coating operations, the inner and outer layers can be applied separately or simultaneously either by coextrusion or by lamination of a previously prepared multilayered film.

Preferably, the individual layers of the multilayered plastic coatings are applied simultaneously by either coextrusion or multilayer film lamination techniques. However, in an alternative embodiment, it is also possible to arrive at the desired type of multilayer plastic coated can stock without the use of organic solvent-based coating systems by first applying the adhesive synthetic thermoplastic resin inner layers to the steel substrate from an aqueous dispersion of such resin (e.g., such as the ammoniated aqueous dispersions described in U.S. Patent 3,799,901) and thereafter applying the ≧121°C melting point resin outer layers to the exposed surfaces of the adhesive resin inner layers via either extrusion coating or film lamination techniques.

Regardless of how the above-noted multilayered coatings are applied, it is necessary to subject the resulting laminate to a post-heating treatment prior to the can forming draw-redraw step at a temperature above the crystalline melting point of the highest melting resin employed in said multilayered coating for a short period of time such as, for example, for a period of 5 minutes or less. The post-heating procedure is generally conducted at a temperature of from 149° to 260°C and for a period of time of from 0.2 to 5 minutes.

The use of the hereinbefore described multilayer plastic coated can stock in the actual can forming operations is conducted pursuant to conventional draw-redraw can forming techniques and, naturally, such operation can consist of either a single draw or multiple drawing steps depending upon the ultimate depth of draw (or draw ratio) required for the particular type of can to be formed in such operation.

The formation of can bodies (especially deeply drawn can bodies) by the draw-redraw forming process imparts a high degree of stress to the container stock employed and a significant amount of unrelieved

**0 062 385**

residual stress can remain in the plastic coating employed on such container stock following can body formation therefrom. It is therefore important in the practice of the present invention that the multilayer plastic coating employed has sufficient strength and adhesion at ambient temperatures to withstand such residual .stresses without coating failure during ambient temperature storage of foods and beverages therein. In addition, since food and/or beverage canning operations often involve processing at elevated temperatures (e.g., such as steam processing at about 121°C) for prolonged periods of time (e.g., as much as an hour or more), it is similarly important that the multilayered plastic coating employed have sufficient strength and adhesion to avoid coating failure under such elevated temperatures.

In the case of the hereinbefore described random ethylene/carboxylic acid copolymer adhesive resins, it has been found that, while such resins exhibit adequate ambient temperature (e.g., normal room temperature of 20° to 25°C) strength properties to generally withstand the aforementioned residual stresses, the strength properties of such resins are not normally sufficient to withstand such residual stresses at the elevated temperatures (e.g., usually about 121°C) normally employed in food or beverage canning or processing operations. Fortunately, however, it has also been found that the can bodies formed by the draw-redraw process from the above-described multilayered plastic coated steel sheet material (i.e., using the indicated adhesive resin inner layers therein) can be caused to successfully withstand the aforementioned type of elevated temperature canning and/or processing operations by relieving the aforementioned residual stresses (i.e., those residing in the multilayered coating after draw-redraw can body formation) by subjecting the can body, after its formation but prior to any food or beverage filling and processing operations, to a temperature above the crystalline melting point of the highest melting point resin employed in said multi-layered coating for a time sufficient to relieve the stresses created in such coating during the can body formation. Typically, when such stress-relieving step is conducted in a hot air oven, the oven temperature will be in the range of from 149° to 260°C preferably from 191° to 232°C and the can bodies to be treated will have a residence time in said oven of from 0.2 to 5 minutes (preferably about 1 minute or so). On the other hand, when more rapid heating means are employed, such as, for example, induction heating techniques, much shorter heating cycles such as, for example, on the order of only a few seconds or so can be sufficient to raise the temperature of the multilayered coating to a level above the crystalline melting point of the highest melting point component thereof.

Alternatively, the multilayered coating or coatings may be subjected, either prior to, during or subsequent to the application thereof to the steel sheet material, to an electron beam irradiation dosage of from 2 to 20 megarads.

The elevated temperature strength and/or viscoelastic properties of such.coatings are sufficiently enhanced to meet the above-noted elevated temperature (e.g., retorting· temperature) performance requirements in view of the crosslinking of the resins via the use of such conventional high energy electron beam irradiation techniques. Such electron beam irradiation crosslinking treatment can be suitably performed in the practice of the present invention either prior to (e.g., in free single or multilayered plastic film form) or subsequent to the application of the instant multilayered thermoplastic resin coating to the steel substrate as well as (though less preferably) after formation of the can body from the coated steel sheet material.

In the aforementioned irradiation treatment of such free films or plastic/metal/plastic laminate sheet material (or the can bodies formed therefrom), a total radiation dosage of from 2 to 20, preferably from 5 to 10, megarads has been found to typically be satisfactory for the purposes of the present invention.

Another feature to note in the practice of the present invention is that the interlayer adhesion between the outer layer and its corresponding adhesive resin inner layer can be a determining factor in the ability of the overall multilayer structure to withstand the rather severe stresses imparted during draw-redraw can body formation and/or any residual stress remaining during the subsequent canning/processing operations. In some cases (i.e., in the case of a high density polyethylene or nylon outer layer and the aforementioned random ethylene/ethylenically unsaturated carboxylic acid copolymer inner layers) the direct adhesion between such layers has been found to generally be sufficient to withstand such stresses. However, in any cases where the direct adhesion between such layers is not alone sufficient to withstand the indicated stresses, it may be necessary or desirable to employ an intermediate adhesive or compatibilizing layer of a third thermoplastic resin (or of a resin blend) which exhibits good adhesion to both of the resins employed, respectively, in the outer and inner layers of the coating.

The practice of the present invention is further illustrated by reference to the following examples.

**Examples 1 and 2**

In these examples, 2 different multilayered plastic/chrome-chrome oxide coated steel/multilayered plastic laminates are prepared by laminating a previously prepared multilayered plastic film to both sides of a 191 μm (7.5 mil) thick chrome-chrome oxide coated steel sheet. The lamination is conducted by preheating the steel sheet to about 204°C and passing said preheated steel sheet through closed nips already threaded with the two multilayered films and by then post-heating the so-formed laminate in a hot air oven at an elevated temperature (i.e., 204°C for Example 1 and about 221°C for Example 2) for 5 minutes. The resulting laminate is then formed into a 307×303 size can body via a draw-redraw operation and the resulting can body is thereafter post-baked for about 1 minute in a hot air oven maintained at a temperature of about 204°C in the case of Example 1 and at about 221°C in the case of Example 2, and is subsequently

5

(i.e., after cooling to room temperature) subjected to a grease and steam resistance testing by filling the can body with grease (i.e., lard) and exposing the filled can to a temperature of 121°C for 1 hour and by exposure to steam in an autoclave at 121°C for 1 hour. The multilayered film employed in the individual examples, and the steam and grease resistance results for the resulting cans formed from laminates made therewith, are summarized in Table I, below.

For comparative purposes, two additional runs (i.e., Controls 1 and 2) are made in the same fashion (i.e., using the same plastic/steel/plastic laminates as in Examples 1 and 2, respectively) except that the indicated post-baking of the formed can bodies is eliminated.

TABLE I

| Example No. | Inner adhesive layer | | >121°C Melting point outer layer | | Grease test | Steam test |
|---|---|---|---|---|---|---|
| | Type | Thickness | Type | Thickness | | |
| 1[4] | E/AA[2] | 7.6 μm (0.3 mil) | HDPE[1] | 17.8 μm (0.7 mil) | Passed | Passed |
| 2[5] | E/AA[2] | 17.8 μm (0.7 mil) | Nylon[3] | 7.6 μm (0.3 mil) | Passed | Passed |
| Control 1* | E/AA[2] | 7.6 μm (0.3 mil) | HDPE[1] | 17.8 μm (0.7 mil) | Failed | Failed |
| Control 2* | E/AA[2] | 17.8 μm (0.7 mil) | Nylon[3] | 7.6 μm (0.3 mil) | Failed | Failed |

[1] High density polyethylene (density=0.965 g/cc and melt index=0.7).
[2] Random copolymer of ethylene with 6.5 weight percent acrylic acid having a melt index of 5.5.
[3] Nylon 6 supplied by Allied Chemical Co. under the trade name of Capron® 8207 (melting point of 216°C and melt index at 235°C of 4.6).
[4] Can body subjected to post-baking operation for about 1 minute in a hot air oven and at about 204°C subsequent to its formation but prior to steam and grease resistance testing.
[5] Can body subjected to post-baking operation for about 1 minute in a hot air oven at about 221°C subsequent to its formation but prior to steam and grease resistance testing.
* Not an example of the invention.
® Trademark.

**0 062 385**

Examples 3 and 4

Two additional multilayered plastic/chrome-chrome oxide coated steel/multilayered plastic laminates were prepared in accordance with the procedure of Examples 1 and 2, except that following the post-heating treatment, each of the laminates was irradiated on each side with a total per-side irradiation dosage of 5 megarads of high energy electron beam irradiation. Thereafter, the resulting irradiated laminate was formed into a 307×303 size can body via the same draw-redraw operation as in Examples 1 and 2 and the resulting can body was subjected to the same grease and steam resistance test. The multilayered film employed in Examples 3 and 4, and the steam and grease resistance results for the resulting cans formed from laminates made therewith, are summarized in Table II, below.

In addition to the laminates of Examples 3 and 4, a comparative laminate (i.e., Control 3) was prepared corresponding to the Example 3 laminate except that the electron beam irradiation treatment was eliminated. The grease and steam resistance results for a 307×303 can body formed from the Control 3 laminate are also summarized in Table II.

8

TABLE II

| Example No. | Inner adhesive layer | | >121°C Melting point outer layer | | Grease test | Steam test |
|---|---|---|---|---|---|---|
| | Type | Thickness | Type | Thickness | | |
| 3[4] | E/AA[2] | 7.6 µm (0.3 mil) | HDPE[1] | 17.8 µm (0.7 mil) | Passed | Passed |
| 4[4] | E/AA[2] | 17.8 µm (0.7 mil) | Nylon[3] | 7.6 µm (0.3 mil) | Passed | Passed |
| Control 3* | E/AA[2] | 7.6 µm (0.3 mil) | HDPE[1] | 17.8 µm (0.7 mil) | Failed | Failed |

[1] High density polyethylene (density=0.965 g/cc, melt index=0.7, and melting point=135°C).

[2] Random copolymer of ethylene with 6.5 weight percent acrylic acid having a melt index of 5.5.

[3] Nylon 6 supplied by Allied Chemical Co. under the trade name of Capron® 8207 (melting point of 216°C and melt index at 235°C of 4.6).

[4] Plastic/metal/plastic laminated sheet stock exposed on each side to 5 megarads of electron beam irradiation after formation but prior to can body formation.

* Not an example of the invention.

® Trademark.

Example 5

The procedure of Example 4 was repeated except that the plastic coated steel sheet was irradiated on each side with a 10 megarad dosage instead of 5 as in Example 4. The steam and grease resistance results for cans formed from the indicated irradiated laminate are summarized in Table III, below.

In addition, a comparative run (Control 4) is also made in the same fashion and using the same 2-layer plastic film except that irradiation treatment of the resulting plastic/steel laminate is eliminated. The results for this comparative run are also summarized in Table III, below.

TABLE III

| Example No. | Multilayered film employed | Grease test | Steam test |
|---|---|---|---|
| 5 | 7.6 µm Capron® 8207/17.8 µm EAA[1] | Passed | Passed |
| Control 4* | 7.6 µm Capron® 8207/17.8 µm EAA | Failed | Failed |

[1] Laminate exposed to 10 megarad of electron beam irradiation after its formation but prior to can body formation therefrom.

* Not an example of the invention (no irradiation treatment).

Capron® 8207=Nylon 6 supplied by Allied Chemical Co. having melting point of 216°C and melt index at 235°C of 4.6.

EAA=Random ethylene/acrylic acid copolymer (6.5% by weight acrylic acid) supplied by The Dow Chemical Co. (melting point=100°C and melt index at 190°C=5.5).

® Trademark.

**Claims**

1. A drawn food or beverage container body characterized in that it is made of a laminated or extrusion coated steel sheet comprising a steel sheet having adhered to at least one major surface thereof a multilayered synthetic thermoplastic resin coating comprising an adhesive synthetic thermoplastic resin inner layer which is composed of at least a major proportion of a random copolymer of ethylene, which is solid at ambient temperature and atmospheric pressure, with from 1 to 30 weight percent, based upon said copolymer, of an ethylenically unsaturated carboxylic acid monomer or a partial ester or an anhydride thereof and which copolymer is bonded on one side directly to the surface of said steel sheet and is adhered on its other side to an outer layer of a synthetic thermoplastic polymer resin having a crystalline melting point of at least 121°C, and that the container body has been post-baked after its formation but prior to its use in food or beverage canning operations at a temperature above the crystalline melting point of the highest melting point resin employed in said thermoplastic resin coating for such period of time as to relieve the stress created in such coating during the formation of said can body, and/or has been exposed to an electron beam irradiation dosage of from 2 to 20 megarads.

2. The container body of claim 1, wherein the steel sheet is chrome/chrome oxide coated steel.

3. The container body of claim 1 or 2, wherein the adhesive layer comprises a copolymer of a major proportion of ethylene and from 2 to 20 weight percent, based upon the weight of such copolymer, of an ethylenically unsaturated carboxylic acid monomer.

4. The container body of claim 1, 2 or 3, wherein the outer layer comprises a high density polyethylene resin having a density of from 0.950 to 0.965 g/cc and a melt index from 0.05 to 5 or a polyamide resin.

5. The container body of claim 1, 2 or 3, wherein the outer layer comprises a blend of a high density polyethylene resin having a melt index of from 0.05 to 3 and a density of from 0.960 to 0.965 g/cc with up to 30 weight percent based upon the weight of such blend of a low density polyethylene resin.

6. The container body of claim 1, 2 or 3, wherein the adhesive layer comprises a copolymer of a major proportion of ethylene with from 2 to 20 weight percent, based upon such copolymer, of acrylic or methacrylic acid, and wherein the outer layer comprises a high density polyethylene resin having a melt index of 3 or less and a density of at least 0.960 or a polyamide resin.

7. The container body of any one of the preceding claims, wherein the steel sheet material has a thickness of from 127 to 381 µm (5 to 15 mils), and the multilayered synthetic thermoplastic resin coating has an overall thickness of from 5.1 to 20.3 µm (0.2 to 2.8 mils).

8. A container characterized in that it comprises the container body of any one of the preceding claims, and a food or beverage hermetically contained within the container body.

9. A method for forming a food or beverage container body, characterized in that it comprises the steps of adhering to at least one planar surface of a steel sheet material the multilayered synthetic thermoplastic resin coating of any one of claims 1 to 7, forming the resulting coated steel sheet material into said container body via a draw-redraw container forming process, post-baking the coated container body formed by said draw-redraw process at a temperature above the crystalline melting point of the highest melting point resin employed in said thermoplastic resin coating for such period of time as to relieve the stress created in such coating during the formation of said can body.

10. The method of claim 9, wherein post-baking of the formed container body takes place in a hot air

**0 062 385**

oven maintained at a temperature of from 149° to 260°C for a period of from 0.2 to 5 minutes prior to its use in food or beverage canning operations.

11. A method for forming a food or beverage container body, characterized in that it comprises the steps of adhering to at least one planar surface of a steel sheet material the multilayered synthetic thermoplastic resin coating of any one of claims 1 to 7, exposing the coating to an electron beam irradiation dosage of from 2 to 20 megarads either prior to, during or subsequent to, the application of such coatings to said steel sheet material, and forming the resulting coated steel sheet material into said container body via a draw-redraw container forming process.

12. The process of claim 11, wherein the electron beam irradiation dosage employed is from 5 to 10 megarads.

13. The process of claim 11 or 12, wherein the electron beam irradiation of the coating is conducted prior to the draw-redraw formation of the food or beverage can body from the laminated or extrusion coated steel sheet.

14. The process of claim 11 or 12, wherein the electron beam irradiation is conducted on the coating in free film form prior to the application of such coating to the steel sheet material.

15. The method of claim 11, characterized by the steps of extrusion coating or laminating to both sides of the steel sheet material said multilayered synthetic thermoplastic coating and irradiating both multilayered thermoplastic coatings.

## Patentansprüche

1. Gezogener Behälterkörper für Nahrungsmittel oder Getränke, dadurch gekennzeichnet, daß er aus einem laminierten oder extrusionsbeschichteten Stahlblech hergestellt ist, das an mindestens eine große Oberfläche des Behälters angeklebt eine mehrschichtige Beschichtung aus einem synthetischen thermoplastischen Harz besitzt, die eine Innenschicht aus einem klebenden synthetischen thermoplastischen Harz umfaßt, die sich aus mindestens einem Hauptanteil eines Random-Äthylencopolymers zusammensetzt, das bei Raumtemperatur und Atmosphärendruck fest ist, und 1 bis 30 Gew.-%, bezogen auf das Copolymer, eines äthylenisch ungesättigten Carbonsäure-Monomers oder eines partiellen Esters oder eines Anhydrids davon enthält, und das an einer Seite direkt auf die Oberfläche des Stahlblechs gebunden ist, und an seiner anderen Seite an eine äußere Schicht eines synthetischen thermoplastischen Polymerharzes, das einen kristallinen Schmelzpunkt von mindestens 121°C besitzt, und dadurch, daß der Behälterkörper nach seiner Bildung aber vor seiner Verwendung zum Abfüllen von Nahrungsmitteln oder Getränken bei einer Temperatur oberhalb des kristallinen Schmelzpunktes des Harzes mit dem höchsten Schmelzpunkt, das in der thermoplastischen Harzbeschichtung verwehdet wurde, während einer Zeitdauer nachgebrannt wurde, die ausreicht, um die Spannung, die während der Bildung des Behälter körpers in einer solchen Beschichtung verursacht wurde, zu entspannen, und/oder einer Elektronenstrahl-Bestrahlungsdosis von 2 bis 20 Megarad ausgesetzt wurde.

2. Behälterkörper nach Anspruch 1, dadurch gekennzeichnet, daß das Stahlblech ein Chrom/Chromoxid-beschichteter Stahl ist.

3. Behälterkörper nach Anspruch 1 oder 2, dadurch gekennzeichnet, daß die klebende Schicht ein Copolymer eines Hauptanteils von Äthylen und von 2 bis 20 Gew.-%, bezogen auf das Gewicht des Copolymers, eines äthylenisch ungesättigten Carbonsäuremonomers umfaßt.

4. Behälterkörper nach Anspruch 1, 2 oder 3, dadurch gekennzeichnet, daß die äußere Schicht ein Polyäthylenharz hoher Dichte umfaßt, das eine Dichte von 0,950 bis 0,965 g/cm³ und einen Schmelzindex von 0,05 bis 5 oder ein Polyamidharz umfaßt.

5. Behälterkörper nach Anspruch 1, 2 oder 3, dadurch gekennzeichnet, daß die äußere Schicht eine Mischung aus einem Polyäthylenharz hoher Dichte mit einem Schmelzindex von 0,05 bis 3 und einer Dichte von 0,960 bis 0,965 g/cm³ mit bis zu 30 Gew.-%, bezogen auf das Gewicht einer solchen Mischung, eines Polyäthylenharzes niedriger Dichte umfaßt.

6. Behälterkörper nach Anspruch 1, 2 oder 3, dadurch gekennzeichnet, daß die klebende Schicht ein Copolymer eines Hauptanteils von Äthylen mit 2 bis 20 Gew.-%, bezogen auf das Copolymer, einer Acryl-oder Methacrylsäure umfaßt, und die äußere Schicht ein Polyäthylenharz hoher Dichte mit einem Schmelzindex von 3 oder weniger und einer Dichte von mindestens 0,960 oder ein Polyamidharz umfaßt.

7. Behälterkörper nach einem der vorhergehenden Ansprüche, dadurch gekennzeichnet, daß das Stahlblechmaterial eine Dicke von 127 bis 381 µm (5 bis 15 mils) besitzt, und die mehrschichtige synthetische thermoplastische Harzbeschichtung eine Gesamtdicke von 5,1 bis 20,3 µm (0,2 bis 2,8 mils) besitzt.

8. Behälter, dadurch gekennzeichnet, daß er einen Behälterkörper nach einem der vorhergehenden Ansprüche umfaßt, und ein Nahrungsmittel oder Getränk, das sich in diesem Behälterkörper hermetisch eingeschlossen befindet.

9. Verfahren zur Bildung eines Behälterkörpers für Nahrungsmittel oder Getränke, dadurch gekennzeichnet, daß es die Stufen umfaßt: Ankleben der mehrschichtigen synthetischen thermoplastischen Harzbeschichtung nach einem der Ansprüche 1 bis 7 an mindestens eine planare Oberfläche eines Stahlblechmaterials, Formen des resultierenden beschichteten Stahlblechmaterials in den Behälterkörper mittels eines Zieh-Nachzieh-Behälterbildungsverfahrens, Nachbrennen des durch das

11

**0 062 385**

Zieh-Nachzieh-Verfahren gebildeten beschichteten Behälterkörpers bei einer Temperatur oberhalb des kristallinen Schmelzpunktes des Harzes mit dem höchsten Schmelzpunkt, das in der thermoplastischen Harzbeschichtung verwendet wurde, während einer Zeitdauer, die ausreicht, um die während der Bildung des Behälterkörpers in einer solchen Beschichtung verursachte Spannung zu entspannen.

10. Verfahren nach Anspruch 9, dadurch gekennzeichnet, daß das Nachbrennen des geformten Behälterkörpers vor seiner Verwendung zum Abfüllen von Nahrungsmitteln oder Getränken in einem Heißluftofen, der bei einer Temperatur von 149°C bis 260°C gehalten wird, während einer Zeitdauer von 0,2 bis 5 Minuten erfolgt.

11. Verfahren zur Bildung eines Behälterkörpers für Nahrungsmittel oder Getränke, dadurch gekennzeichnet, daß es die Stufen umfaßt: Ankleben der mehrschichtigen synthetischen thermoplastischen Harzbeschichtungen nach einem der Ansprüche 1 bis 7 auf mindestens eine planare Oberfläche eines Stahlblechmaterials, die Beschichtung entweder vor, während oder nach der Applikation dieser Beschichtungen auf das Stahlblechmaterial einer Elektronenstrahl-Bestrahlungsdosis von 2 bis 20 Megarad aussetzt, und Formen des resultierenden beschichteten Stahlblechmaterials zum Behälterkörper mittels eines Zieh-Nachzieh-Behälterformverfahrens.

12. Verfahren nach Anspruch 11, dadurch gekennzeichnet, daß die verwendete Elektronenstrahl-Bestrahlungsdosis 5 bis 10 Megarad beträgt.

13. Verfahren nach Anspruch 11 oder 12, dadurch gekennzeichnet, daß die Elektronenstrahl-Bestrahlung der Beschichtung vor der Zieh-Nachzieh-Bildung des Nahrungsmittel- oder Getränkebehälterkörpers aus dem laminierten oder extrusionsbeschichteten Stahlblech erfolgt.

14. Verfahren nach Anspruch 11 oder 12, dadurch gekennzeichnet, daß die Elektronenstrahl-Bestrahlung auf der in Form eines freien Filmes vorliegenden Beschichtung vor der Applikation auf das Stahlblechmaterial erfolgt.

15. Verfahren nach Anspruch 11, gekennzeichnet durch die Stufen: Extrusionsbeschichtung oder Laminierung der mehrschichtigen synthetischen thermoplastischen Beschichtung auf beide Seiten des Stahlblechmaterials und Bestrahlung beider mehrschichtigen thermoplastischen Beschichtungen.

**Revendications**

1. Corps de récipient embouti pour aliments ou boissons, caractérisé en ce qu'il est fabriqué à partir d'une feuille d'acier stratifiée ou revêtue par extrusion comprenant une feuille d'acier sur laquelle est collé, sur au moins une surface principale de celle-ci, un revêtement de résine thermoplastique synthétique multicouche comprenant une couche interne de résine thermoplastique synthétique adhésive qui est composée d'au moins une proportion prédominante d'un copolymère de l'éthylène qui est solide à la température ambiante et sous la pression atmosphérique, avec de 1 à 30% en poids, par rapport à ce copolymère, d'un monomère d'un acide carboxylique à insaturation éthylénique ou d'un ester partiel ou d'un anhydride de celui-ci, et lequel copolymère est lié sur un côté directement à la surface de cette feuille d'acier et est collé sur son autre côté à la couche externe d'une résine polymère thermoplastique synthétique ayant un point de fusion cristalline d'au moins 121°C, et en ce que le corps du récipient a été soumis à une post-cuisson après sa formation, mais avant son utilisation dans des opérations de mise en boîtes d'aliments ou de boissons, à une température supérieure au point de fusion cristalline de la résine ayant le point de fusion le plus élevé utilisée dans ce revêtement de résine thermoplastique pendant une durée telle que soit relâchée la contrainte créée dans ce revêtement au cours de la formation de ce corps de boîte, et/ou a été exposée à une dose d'irradiation par faisceau électronique de 2 à 20 mégarads.

2. Corps de récipient selon la revendication 1, dans lequel la feuille d'acier est un acier revêtu de chrome/oxyde de chrome.

3. Corps de récipient selon la revendication 1 ou 2, dans lequel la couche adhésive comprend un copolymère d'une proportion prédominante d'éthylène et de 2 à 20% en poids, par rapport au poids de ce copolymère, d'un monomère d'un acide carboxylique à insaturation éthylénique.

4. Corps de récipient selon les revendications 1, 2 ou 3, dans lequel la couche externe comprend une résine de polyéthylène haute densité ayant une densité de 0,950 à 0,965 g/ml et un indice de fusion de 0,05 à 5 ou une résine polyamide.

5. Corps de récipient selon les revendications 1, 2 ou 3, dans lequel la couche externe comprend un mélange d'une résine de polyéthylène haute densité ayant un indice de fusion de 0,05 à 3 et une densité de 0,960 à 0,965 g/ml avec jusqu'à 30% en poids, par rapport au poids de ce mélange, d'une résine de polyéthylène basse densité.

6. Corps de récipient selon les revendications 1, 2 ou 3, dans lequel la couche adhésive comprend un copolymère d'une proportion prédominante d'éthylène avec de 2 à 20% en poids, par rapport à ce copolymère, d'acide acrylique ou méthacrylique, et dans lequel la couche externe comprend une résine de polyéthylène haute densité ayant un indice de fusion de 3 ou moins et une densité d'au moins 0,960 ou une résine polyamide.

7. Corps de récipient selon l'une quelconque des revendications précédentes, dans lequel la matière en feuilles d'acier a une épaisseur de 127 à 381 microns (5 à 15 mils), et le revêtement de résine thermoplastique synthétique multicouche a une épaisseur globale de 5,1 à 20,3 microns (0,2 à 2,8 mils).

8. Récipient caractérisé en ce qu'il comprend le corps de récipient selon l'une quelconque des revendications précédentes, et un aliment ou une boisson hermétiquement contenus dans le corps du récipient.

9. Procédé pour former un corps de récipient pour aliments ou boissons, caractérisé en ce qu'il comprend les stades consistant à coller sur au moins une surface plane d'une matière en feuille d'acier, le revêtement de résine thermoplastique synthétique multicouche selon l'une quelconque des revendications 1 à 7, à façonner la matière en feuille d'acier revêtue ainsi obtenue en ce corps de récipient par un procédé de façonnage des récipients par emboutissage-réemboutissage, à soumettre à une post-cuisson le corps de récipient revêtu formé par ce procédé d'emboutissage-réemboutissage à une température supérieure au point de fusion cristalline de la résine ayant le point de fusion le plus élevé utilisée dans ce revêtement de résine thermoplastique pendant un temps tel que soit relâchée la contrainte créée dans ce revêtement au cours de la formation de ce corps de boîte.

10. Procédé selon la revendication 9, dans lequel la postcuisson du corps de récipient formé s'effectue dans une étuve à air chaud maintenue à une température de 149 à 260°C pendant une durée de 0,2 à 5 minutes avant son utilisation dans des opérations de mise en boîtes d'aliments ou de boissons.

11. Procédé pour former un corps de récipient d'aliments ou de boissons, caractérisé en ce qu'il comprend les stades consistant à coller sur au moins une surface plane d'une matière en feuille d'acier le revêtement de résine thermoplastique synthétique multicouche selon l'une quelconque des revendications 1 à 7, à exposer le revêtement à une dose d'irradiation par faisceau électronique de 2 à 20 mégarads soit avant, soit pendant, soit après l'application de ces revêtements sur cette matière en feuille d'acier, et à transformer la matière en feuille d'acier revêtue obtenue en ce corps de récipient par un procédé de façonnage de récipient par un procédé d'emboutissage-réemboutissage.

12. Procédé selon la revendication 11, dans lequel la dose d'irradiation par faisceau électronique utilisé est de 5 à 10 mégarads.

13. Procédé selon les revendications 11 ou 12, dans lequel l'irradiation du revêtement par faisceau électronique est effectuée avant la formation par emboutissage-réemboutissage du corps de boîte pour aliments et boissons à partir de la feuille d'acier stratifiée ou revêtue par extrusion.

14. Procédé selon la revendication 11 ou 12, dans lequel l'irradiation par faisceau électronique est effectuée sur le revêtement sous forme de pellicule libre avant l'application de ce revêtement sur la matière en feuille d'acier.

15. Procédé selon la revendication 11, caractérisé par les stades de revêtement par extrusion ou de stratification sur les deux côtés de la matière en feuille d'acier de ce revêtement thermoplastique synthétique multicouche et d'irradiation des deux revêtements thermoplastiques multicouches.